# EUROPÄISCHE PATENTSCHRIFT

(11) **EP 2 698 561 B1**
(45) Veröffentlichungstag und Bekanntmachung des Hinweises auf die Patenterteilung: **24.06.2020**
(21) Anmeldenummer: 13176229.6
(22) Anmeldetag: 12.07.2013
(51) Int. Cl.: F16F 15/123

(54) **Dämpfbare Nabenscheibe**
Hub that can be damped
Disque de moyeu pouvant être amorti

(30) Priorität: 16.08.2012 DE 102012214572
(43) Veröffentlichungstag der Anmeldung: 19.02.2014
(73) Patentinhaber: ZF Friedrichshafen AG, 88046 Friedrichshafen (DE)
(72) Erfinder: Handrik, Philipp, 02633 Göda (DE); Brand, Bastian, 97753 Karlstadt (DE); Buer, Gerald, 96172 Mühlhausen (DE)
(74) Vertreter: ZF Friedrichshafen AG

(56) Entgegenhaltungen:
- DE-A1- 2 738 860
- DE-B- 1 267 556
- US-A1- 2012 077 605
- US-A1- 2012 115 619
- US-B1- 6 227 976

## Beschreibung

Vorliegende Erfindung betrifft eine dämpfbare Nabenscheibe für eine Kupplungsvorrichtung, insbesondere für eine Kupplungsscheibe einer Reibungskupplung eines Kraftfahrzeugs mit mindestens einer Aussparung zur Aufnahme mindestens eines Dämpfungselements, wobei die Aussparung nach radial außen offen ausgebildet ist, sowie eine Kupplungsvorrichtung mit einer derartigen Nabenscheibe.

Dämpfbare Nabenscheiben werden in Kupplungsscheiben eingesetzt, um Torsionsschwingungen im Antriebsstrang aufzufangen und abzudämpfen. Dabei weist eine dämpfbare Nabenscheibe eine Aufnahme für ein Dämpfungselement, insbesondere für eine Schraubenfeder auf, wobei die Aussparungen radial außen offen oder geschlossen ausgestaltet sein können.

Das Dämpfungselement wird üblicherweise zwischen zwei Seitenwände der Aussparung geklemmt oder mittels eines zusätzlichen Federtellers befestigt. Zudem können, wie beispielsweise die Patentschrift US 6,227,976 zeigt, an den Seitenwänden der Aussparung Nasen vorgesehen sein, die das Dämpfungselement in der Aussparung sichern. Außerdem offenbart das Dokument US 2012/077605 A1 eine Nabenscheibe entsprechend dem Oberbegriff des Anspruchs 1.

Nachteilig an diesem Stand der Technik ist jedoch, dass gerade beim Vorhandensein von in der Aussparung ausgebildeten Nasen die Dämpfungselemente zwar gut gesichert sind, aber nur sehr schwer in die Aufnahmen einbringbar sind.

Aufgabe vorliegender Erfindung ist es deshalb, eine dämpfbare Nabenscheibe für eine Kupplungsscheibe bereitzustellen, die ein einfaches Einlegen und Sichern des Dämpfungselements in einer dafür vorgesehenen Aussparung ermöglicht.

Diese Aufgabe wird durch eine dämpfbare Nabenscheibe gemäß Patentanspruch 1, sowie eine Kupplungsvorrichtung gemäß Patentanspruch 12 gelöst.

Erfindungsgemäß wird eine dämpfbare Nabenscheibe für eine Kupplungsscheibe mit mindestens einer Aussparung zur Aufnahme mindestens eines Dämpfungselements bereitgestellt, wobei die Aussparung nach radial außen offen ausgebildet ist und einen Aussparungsboden und zwei Seitenwänden aufweist. Die Erfindung basiert dabei auf der Idee, die Aussparung in der dämpfbaren Nabenscheibe so auszugestalten, dass mindestens eine der Seitenwände einen in Richtung des Aussparungsbodens schräg verlaufenden ersten Seitenwandabschnitt aufweist, der eine die Aussparungslänge in Richtung des Aussparungsbodens reduzierende Rampe definiert.

Dadurch wird erfindungsgemäß ermöglicht, das Dämpfungselement entlang der Rampe in die Aussparung einzupassen. Die erfindungsgemäße Rampe bedingt ein automatisches Komprimieren des Dämpfungselements, während es von radial außen nach radial innen in die Aussparung gedrückt wird, so dass die Montage erleichtert wird.

Zudem weist die Nabenscheibe an mindestens einer der Aussparungsseitenwände einen zweiten Seitenwandabschnitt auf, der derart mit dem ersten Seitenwandabschnitt zusammenwirkt, dass die mindesten eine Seitenwand eine Auskragung aufweist. Die Auskragung ist derart ausgeformt, dass sie eine Befestigung für das Dämpfungselement bereitstellt. Dies kann beispielsweise dadurch erreicht werden, dass die Auskragung in das zu befestigende Dämpfungselement hineinragt und/oder es umfasst. Ist das Dämpfungselement als Schraubenfeder ausgebildet, ist vorzugsweise die Länge der in die Schraubenfeder hineinragenden Auskragung größer als ein halber Windungsdurchmesser der Schraubenfeder. Dadurch kann eine sichere Befestigung des Dämpfungselements in der Aussparung gewährleistet werden.

Zusätzlich zu der Ausgestaltung mit ist mindestens eine Öffnung in Form eines Langlochs zur Aufnahme eines Befestigungselements umfänglich verlängerbar ist und dadurch maximiert werden kann, da der zusätzliche Bauraum der Schräge bzw. Rampe ausgenutzt werden kann. Dadurch kann sowohl eine Maximierung der Federlänge als auch eine Maximierung der Anschlagswinkel erreicht werden.

Des Weiteren ist die Öffnung radial auf Höhe des ersten schräg verlaufenden Seitenwandabschnitts angeordnet.

Gemäß einem weiteren vorteilhaften Ausführungsbeispiel ist der erste Seitenwandabschnitt mit einer Schräge von ungefähr 10° bis 40°, insbesondere von 15° bis 35°, bezüglich der Einbaurichtung des Dämpfungselements angeschrägt. Dabei ist vorzugsweise der Winkel optimiert auf den Radius des Dämpfungselements, die Länge der Aussparung und/oder die Tiefe der Aussparung. Dadurch kann zum einen die Federlänge maximiert werden und gleichzeitig die radiale Baugröße der Nabenscheibe verringert werden, so dass der Gesamtbauraumbedarf verringert werden kann.

Gemäß einem weiteren vorteilhaften Ausführungsbeispiel weist die die Auskragung aufweisende Seitenwand einen dritten Seitenwandabschnitt auf, der von dem ersten Seitenwandabschnitt radial nach außen verläuft. Vorzugsweise ist der dritte Seitenwandabschnitt in Flucht mit dem zweiten Seitenwandabschnitt, so dass die Seitenwand eine Nase aufweist. Die so ausgebildete Nase vereinigt die Vorteile der Befestigung mittels einer Auskragung und das einfache Einbringen bzw. Eindrücken des Dämpfungselements entlang der durch den zweiten Seitenwandabschnitt gebildeten Rampe. Beim Zusammenbau kann dadurch vorteilhafterweise ein als Schraubenfeder ausgebildetes Dämpfungselement durch den ersten Seitenwandabschnitt beim Eindrücken in die Aussparung komprimiert werden. Nach Überschreiten der maximalen Auskragung bzw. der ausgebildeten Nase schnappt die Schraubenfeder um die Auskragung ein, wodurch das Dämpfungselement sicher befestigt ist.

Alternativ zu dem in Flucht mit dem zweiten Seitenwandabschnitt angeordneten dritten Seitenwandabschnitt, kann der dritte Seitenwandabschnitt in Richtung der Aussparungsöffnung schräg verlaufend angeordnet sein, so dass die Aussparungslänge an der Aussparungsöffnung im Vergleich zu der Aussparungslänge am Aussparungsboden vergrößert ist. Dadurch kann insbesondere eine weiche Federkennlinie des Dämpfungselements im Anfangsbereich dargestellt werden.

Gemäß einem weiteren vorteilhaften Ausführungsbeispiel umfasst die Auskragung einen vierten Seitenwandabschnitt, der in etwa senkrecht zu dem ersten Seitenwandabschnitt verläuft. Dadurch wird sichergestellt, dass das Dämpfungselement bei Beaufschlagung mit einer Torsionsschwingung möglichst wenig Reibung an der Auskragung erfährt. Dabei ist insbesondere vorteilhaft, wenn der vierte Seitenwandabschnitt in etwa senkrecht zum ersten Seitenwandabschnitt ausgebildet ist und damit einen nach radial außen geöffneten Winkel von etwa 10° bis 40°, insbesondere von 15° von 35°, bezüglich des Aussparungsbodens definiert.

Gemäß einem weiteren vorteilhaften Ausführungsbeispiel ist die Aussparung in der Nabenscheibe symmetrisch ausgebildet. Das bedeutet, dass beide Seitenwände mit der oben beschriebenen Rampe und/oder der oben beschriebenen Auskragung ausgestattet sind. Dadurch wird eine besonders einfache Montage der Dämpfungselemente in den Aussparungen ermöglicht.

Es ist jedoch auch vorstellbar, dass die Aussparung an einer ihrer Seitenwände eine Auskragung aufweist, die ohne Rampe ausgebildet ist und an ihrer anderen Seitenwand eine mit Rampe ausgebildete Auskragung aufweist. Dadurch kann das einzubauende Dämpfungselement beispielsweise an der rampenlosen Auskragung eingesteckt werden und entlang der Rampe an der anderen Seitenwand zusammengedrückt und eingepasst werden.

Ein weiterer vorteilhafter Aspekt der vorliegenden Erfindung betrifft eine Kupplungsvorrichtung, insbesondere eine Reibungskupplung für ein Kraftfahrzeug mit einer dämpfbaren Nabenscheibe, wie oben beschrieben.

Eine derartige Kupplungsvorrichtung hat neben den bekannten Vorteilen einer dämpfbarer Nabenscheibe den Vorteil, dass aufgrund der radialen Bauraumverkürzung auch die Kupplungsscheibe selbst und damit die Kupplungsvorrichtung radial kleiner baut, so dass der Platzbedarf in einem Fahrzeug weiter verringert ist.

Weitere Vorteile und bevorzugte Ausführungsformen sind in den Unteransprüchen, der Beschreibung und den Figuren definiert.

Im Folgenden soll die Erfindung anhand eines in der Zeichnung dargestellten Ausführungsbeispiels näher beschrieben werden. Dabei zeigt die Zeichnung ein rein exemplarisches, wenn auch bevorzugtes Ausführungsbeispiel, das jedoch nicht dazu verwendet werden soll, den Schutzbereich der Anmeldung festzulegen. Dieser wird alleine durch die anhängigen Ansprüche definiert.

Es zeigt:

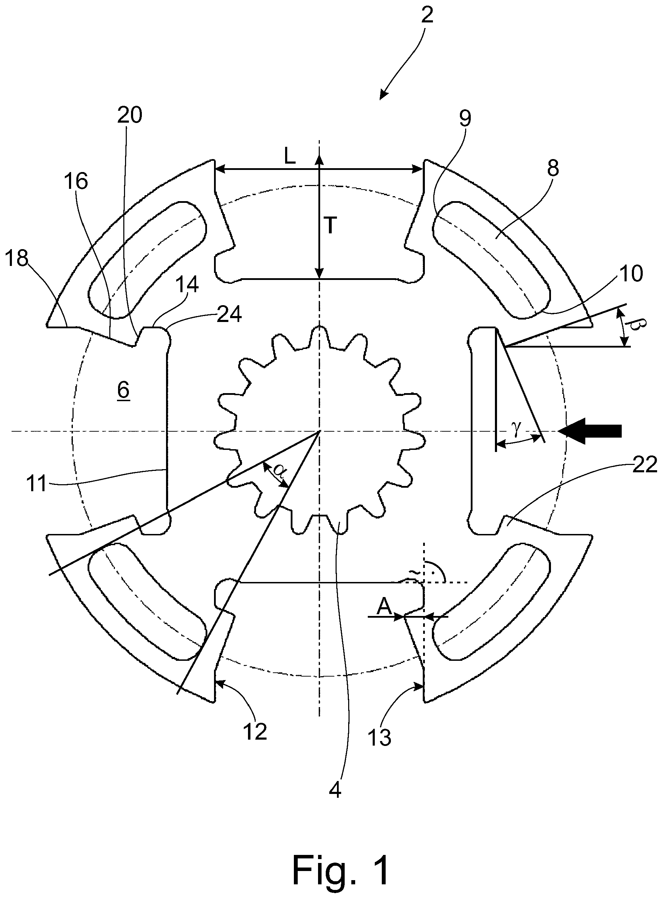

Figur 1: eine schematische Aufsicht auf ein bevorzugtes Ausführungsbeispiel der erfindungsgemäßen Nabenscheibe.

Figur 1 zeigt eine schematische Aufsicht auf eine Nabenscheibe 2, mit einer für eine Nabenscheibe 2 typischen Innenverzahnung 4, die auf eine Nabe (nicht dargestellt) streckbar ist, welche wiederum drehfest aber axial verschiebbar mit einer Getriebeeingangswelle (nicht dargestellt) verbindbar ist. Des Weiteren weist die Nabenscheibe 2 Aussparungen 6 auf, die zur Aufnahme von Dämpfungselementen, insbesondere von Schraubenfedern, ausgelegt sind.

Um die Nabenscheibe 2 mit Deckblechen (nicht dargestellt) und einem die Reibbeläge tragenden Träger (nicht dargestellt) zu verbinden, weist die Nabenscheibe 2 weiterhin Öffnungen 8 auf, die zur Aufnahme eines Befestigungselements (nicht dargestellt) dienen. Gleichzeitig dienen Seitenwände 9, 10 der Öffnung 8 als Anschlag für die Befestigungselemente und damit für die maximale Verdrehbarkeit der Nabenscheibe 2. Die maximale Verdrehbarkeit der Nabenscheibe 2 wird demnach über die Länge der Öffnung 8, bzw. über den Öffnungswinkel α der Öffnung 8 gegeben. Wie nachfolgend genau beschrieben wird, kann mit der erfindungsgemäßen Nabenscheibe 2 der Öffnungswinkel α der Öffnungen 8 im Vergleich zum Stand der Technik vergrößert werden, so dass die Nabenscheibe 2 einen größeren Dämpfungsbereich als bekannte Nabenscheiben aufweist.

Die Aussparung 6 bildet in dem dargestellten Ausführungsbeispiel eine im Wesentlichen U-förmige Aufnahmetasche mit einer Aussparungslänge (L) für die Aufnahme eines Dämpfungselements (nicht dargestellt). Die Aussparung weist einen im Wesentlichen ebenen Aussparungsboden 11 und zwei Seitenwänden 12, 13 auf. Statt eines im Wesentlichen ebenen Aussparungsbodens 11 kann der Aussparungsboden 11 auch nach radial außen gewölbt oder dachartig ausgebildet sein. Das in der Aussparung 6 aufgenommen Dämpfungselement ist dazu ausgelegt eingeleitete Torsionsschwingungen abzudämpfen. Besonders bevorzugt sind als Dämpfungselemente Schraubenfedern, die in der Aufnahme 6 befestigt werden. Die Befestigung kann, wie aus dem Stand der Technik bekannt, beispielsweise über einen Federteller oder über zapfenartige Auskragungen erfolgen.

Nachteilig an diesen Ausgestaltungen ist jedoch, dass zum einen der Federteller ein zusätzliches Bauteil darstellt und zum anderen das Anbringen der Schraubenfeder an den Zapfen schwierig und kraftaufwändig ist.

Erfindungsgemäß weist deshalb die Aussparung 6 an mindestens einer ihrer Seitenwände 12, 13, einen in Richtung des Aussparungsbodens 11 schräg verlaufenden ersten Seitenwandabschnitt 16 auf, der eine die Aussparungslänge L in Richtung des Aussparungsbodens 11 reduzierende Rampe definiert. Mit anderen Worten bildet der erste Seitenwandabschnitt 16 eine sich ins Innere der Aussparung 6 erstreckende Rampe.

Wie Figur 1 weiterhin zu entnehmen ist, kann in dem gezeigten Ausführungsbeispiel die Seitenwand 12; 13 insgesamt in einen ersten Seitenwandabschnitt 16, einen zweiten Seitenwandabschnitt 14, einen dritten Seitenwandabschnitt 18, und einen vierten Seitenwandabschnitt 20 gegliedert werden. Wie dargestellt können der zweite und der dritte Seitenwandabschnitt 14, 18 in Flucht zueinander angeordnet sein. Selbstverständlich ist aber auch möglich den dritten Seitenwandabschnitt 18 nach radial außen, die Aussparung vergrößernd, anzuschrägen. Dadurch ist in Einbaulage des Dämpfungselements, zwischen Dämpfungselement und drittem Seitenwandanschnitt 18 ein Spalt vorhanden, der dafür sorgt, dass eine Federkennlinie des Dämpfungselements im Anfangsbereich besonders weich ausgestaltet ist.

Des Weiteren kann vorteilhafterweise die radiale Ausdehnung des dritten Seitenwandabschnitts 18 derart gewählt werden, dass das Dämpfungselement radial außen gerade noch an dem dritten Seitenwandabschnitt 18 anliegt. Dadurch kann insbesondere im Vergleich zu Nabenscheiben mit geschlossener Aufnahme die Nabenscheibe radial kleiner gefertigt werden, so dass der Bauraumbedarf der Nabenscheibe und damit auch der Kupplungsvorrichtung verringerbar ist.

In dem hier dargestellten Ausführungsbeispiel, liegt der von dem dritten Seitenwandabschnitt 18 und dem ersten Seitenwandabschnitt 16 eingeschlossene Winkel β vorzugsweise im Bereich von 10° bis 40°, insbesondere von 15° bis 35°, wobei die genaue, durch den Winkel β bestimmte Anstellung des zweiten Seitenwandabschnitts 14 abhängt von einer Gesamtlänge L der Aussparung 6, einer Tiefe T der Aussparung 6 und natürlich einer radialen Ausdehnung des aufzunehmenden Dämpfungselements. Der Winkel β entspricht gleichermaßen einem Winkel zwischen einer Einbaurichtung des Dämpfungselements (Pfeil) und dem ersten Seitenwandabschnitt 16.

Weiterhin ist in Figur 1 dargestellt, dass die Aussparung 6 einen vierten Seitenwandabschnitt 20 aufweist, der zusammen mit dem ersten Seitenwandabschnitt 16 eine in der Seitenwand 12, 13 ausgebildete Nase oder Auskragung 22 definiert. Dabei ist vorzugsweise der vierte Seitenwandabschnitt 20 ebenfalls schräg ausgebildet, wobei der eingeschlossene Winkel γ bezüglich des ebenen Aussparungsbodens 11 (oder allgemeiner der Senkrechten zu der Einbaurichtung des Dämpfungselements) ebenfalls im Bereich von 10° bis 40°, insbesondere von 15° bis 35°, liegt. Aufgrund der schrägen Ausgestaltung des vierten Seitenwandabschnitts 20 kann eine Auskragung 22 bereitgestellt werden, die eine möglichst reibungslose Führung des aufzunehmenden Dämpfungselements bereitstellt.

Die Größe A der Auskragung 22, also das Vorspringen der Nase aus der Seitenwand 12, 13 der Aussparung 6, ist vorzugsweise derart dimensioniert, dass bei Verwendung einer Schraubenfeder als Dämpfungselement die Auskragungslänge A größer ist als ein halber Windungsdurchmesser der Schraubenfeder. Dadurch wird eine gute radiale Führung der Feder bereitgestellt.

Des Weiteren zeigt Figur 1, dass der Aussparungsboden 11 eine Vertiefung 24 aufweist, die dazu ausgelegt ist, insbesondere bei der Verwendung einer Schraubenfeder als Dämpfungselement, einen Sitz für die Schraubenfeder bereitzustellen. Zusammen mit der Auskragung 22 kann dadurch die Schraubenfeder, oder allgemein das Dämpfungselement, in der Aufnahme 6 sicher befestigt werden und die Nabenscheibe 2 zusammen mit den Dämpfungselementen als vormontierte Baueinheit an der Kupplungsschreibe montiert werden.

Wie Figur 1 weiterhin zu entnehmen ist, ermöglicht die Ausgestaltung der Aussparung 22 mit angestelltem Seitenwandabschnitt 16 eine Verlängerung der Öffnungen 8 in umfänglicher Richtung. Dies ist dadurch bedingt, dass radial innen im Bereich der Seitenwände 9, 10 der Öffnung 8 mehr Nabenscheibenmaterial zur Verfügung steht als wenn die Seitenwand 12, 13 der Aussparung 6 senkrecht zum Aussparungsboden 11 verlaufen würde (siehe gestrichelte Linie in Figur 1).

Aufgrund der längeren Öffnung 8 und damit des größeren durch den Öffnungswinkel α gegebenen Verdrehwinkel, ist auch der Dämpfungsbereich der Nabenscheibe größer als bei herkömmlichen, aus dem Stand der Technik bekannten Nabenscheiben. Dadurch kann sowohl eine Maximierung der Dämpfungselemente als auch eine Maximierung des möglichen Verdrehbereichs erreicht werden.

Insgesamt stellt die erfindungsgemäße Nabenscheibe eine dämpfbare Nabenscheibe bereit, bei der zum einen der Bauraumbedarf verringert ist und zum anderen der Dämpfungsbereich vergrößert wurde. Des Weiteren ist vorteilhaft, dass die Nabenscheibe als vormontierte Baueinheit mit daran angebrachten Dämpfungselementen für einen Montagevorgang zur Verfügung gestellt werden kann. Die erfindungsgemäße Anschrägung des ersten Seitenwandabschnitts ermöglicht zudem ein erleichtertes Einschnappen der Dämpfungselemente, so dass das Einbringen der Dämpfungselemente in die Nabenscheibe vereinfacht ist. Die Rampe bewirkt beim Eindrücken der Dämpfungselemente von radial außen nach radial innen in die Aussparung ein automatisches Komprimieren des Dämpfungselements, das bei Überschreiten der maximalen Auskragungslänge um die Auskragung schnappt und somit sicher in der Aussparung befestigt ist. Gleichzeitig ermöglicht die Rampe eine Vergrößerung der Öffnung für die Befestigungselemente und damit eine Vergrößerung des Verdrehbereichs der Nabenscheibe relativ zu den Deckblechen, und damit eine Vergrößerung des Dämpfungsbereichs.

### Bezugszeichen

- 2: Nabenscheibe
- 4: Innenverzahnung
- 6: Aussparung
- 8: Öffnung
- 9, 10: Seitenwand der Öffnung
- 11: Aussparungsboden
- 12, 13: Aussparungsseitenwand
- 14: zweiter Seitenwandabschnitt der Aussparung
- 16: erster Seitenwandabschnitt der Aussparung
- 18: dritter Seitenwandabschnitt der Aussparung
- 20: vierter Seitenwandabschnitt der Aussparung
- 22: Auskragung
- 24: Vertiefung in Aussparungsboden

- A: Auskragungslänge
- L: Aussparungslänge
- T: Aussparungstiefe

- α: Öffnungswinkel Öffnung 8
- β: Anstellwinkel erster Seitenwandabschnitt
- γ: Anstellwinkel vierter Seitenwandabschnitt

## Patentansprüche

1. Dämpfbare Nabenscheibe (2) für eine Kupplungsvorrichtung, insbesondere für eine Kupplungsscheibe einer Reibungskupplung eines Kraftfahrzeugs, mit mindestens einer Aussparung (6) mit einer Aussparungslänge (L) zur Aufnahme mindestens einer Schraubenfeder, wobei die Aussparung (6) nach radial außen offen ausgebildet ist und einen Aussparungsboden (11) und zwei Seitenwände (12, 13) aufweist, wobei mindestens eine der Seitenwände (12; 13) einen in Richtung des Aussparungsbodens (11) schräg verlaufenden ersten Seitenwandabschnitt (16) aufweist, der eine die Aussparungslänge (L) in Richtung des Aussparungsbodens (11) reduzierende Rampe definiert sodass bei einem Einbringen der Schraubenfeder von radial außen nach radial innen in die Aussparung (6) die Schraubenfeder automatisch komprimiert wird, und wobei die Aussparung (6) an mindestens einer ihrer Seitenwände (12; 13) einen zweiten Seitenwandabschnitt (14) aufweist, der derart mit dem ersten Seitenwandabschnitt (16) zusammenwirkt, dass die mindestens eine Seitenwand (12; 13) eine Auskragung (22) zur Befestigung der Schraubenfeder aufweist und **dadurch gekennzeichnet, dass** die Nabenscheibe (2) weiterhin mindestens eine Öffnung (8) in Form eines Langlochs zur Aufnahme eines Befestigungselements aufweist, wobei die Öffnung (8) radial auf Höhe des ersten schräg verlaufenden Seitenwandabschnitts (16), angeordnet ist.

2. Nabenscheibe nach Anspruch 1, wobei die Schräge des ersten Seitenwandabschnitts (16) durch die Aussparungslänge (L), eine Aussparungstiefe (T) und/oder eine radiale Ausdehnung der aufzunehmenden Schraubenfeder bestimmbar ist, wobei vorzugsweise der Seitenwandabschnitt (16) eine Schräge von ungefähr 10° bis 40°, insbesondere von 15° bis 35°, bezüglich einer Einbaurichtung der Schraubenfeder aufweist.

3. Nabenscheibe nach Anspruch 2, wobei die Auskragung (22) dazu ausgelegt ist, eine Befestigung für die Schraubenfeder bereitzustellen, wobei vorzugsweise eine Auskragungslänge (A) der einzubauenden Schraubenfeder angepasst ist.

4. Nabenscheibe nach einem der Ansprüche 1 bis 3, wobei die die Auskragung aufweisende Seitenwand (12; 13) einen dritten Seitenwandabschnitt (18) aufweist, der von dem ersten Seitenwandabschnitt (16) radial nach außen verläuft, und vorzugsweise in Flucht mit dem zweiten Seitenwandabschnitt (14) ausgebildet ist.

5. Nabenscheibe nach Anspruch 4, wobei der dritte Seitenwandabschnitt (18) in Richtung der Aussparungsöffnung schräg verlaufend angeordnet ist, so dass die Aussparungslänge (L) an der Aussparungsöffnung im Vergleich zu der Aussparungslänge (L) am Aussparungsboden (11) vergrößert ist.

6. Nabenscheibe nach einem der Ansprüche 1 bis 5, wobei die Auskragung (22) einen vierten Seitenwandabschnitt (20) umfasst, der in etwa senkrecht zu dem ersten Seitenwandabschnitt (16) verlaufend ausgebildet ist.

7. Nabenscheibe nach Anspruch 6, wobei der vierte Seitenwandabschnitt (20) als radiale Führung für die aufzunehmende Schraubenfeder ausgebildet ist.

8. Nabenscheibe nach einem der vorhergehenden Ansprüche, wobei die Aussparung (6) symmetrisch ausgebildet ist.

9. Kupplungsvorrichtung, insbesondere Reibungskupplung für ein Kraftfahrzeug, mit einer dämpfbaren Nabenscheibe (2) nach einem der vorhergehenden Ansprüche.

## Claims

1. Dampable hub plate (2) for a clutch apparatus, in particular for a clutch disc of a friction clutch of a motor vehicle, with at least one cut-out (6) with a cut-out length (L) for receiving at least one helical spring, the cut-out (6) being of radially outwardly open configuration and having a cut-out bottom (11) and two side walls (12, 13), at least one of the side walls (12; 13) having a first side wall section (16) which runs obliquely in the direction of the cut-out bottom (11) and defines a ramp which reduces the cut-out length (L) in the direction of the cut-out bottom (11), with the result that the helical spring is automatically compressed in the case of an introduction of the helical spring from the radial outside to the radial inside into the cut-out (6), and, on at least one of its side walls (12; 13), the cut-out (6) having a second side wall section (14) which interacts with the first side wall section (16) in such a way that the at least one side wall (12; 13) has a projection (22) for fastening the helical spring, and **characterized in that** the hub plate (2) has, furthermore, at least one opening (8) in the form of a slot for receiving a fastening element, the opening (8) being arranged radially at the level of the first obliquely running side wall section (16).

2. Hub plate according to Claim 1, it being possible for the slope of the first side wall section (16) to be defined by way of the cut-out length (L), a cut-out depth (T) and/or a radial extent of the helical spring to be received, the side wall section (16) preferably having a slope of approximately from 10° to 40°, in particular of from 15° to 35°, with regard to an installation direction of the helical spring.

3. Hub plate according to Claim 2, the projection (22) being designed to provide a fastening means for the helical spring, a projection length (A) preferably being adapted to the helical spring to be installed.

4. Hub plate according to one of Claims 1 to 3, the side wall (12; 13) which has the projection having a third side wall section (18) which runs from the first side wall section (16) radially to the outside, and preferably being configured flush with the second side wall section (14).

5. Hub plate according to Claim 4, the third side wall section (18) being arranged so as to run obliquely in the direction of the cut-out opening, with the result that the cut-out length (L) at the cut-out opening is enlarged in comparison with the cut-out length (L) at the cut-out bottom (11).

6. Hub plate according to one of Claims 1 to 5, the projection (22) comprising a fourth side wall section (20) which is configured so as to run approximately perpendicularly with respect to the first side wall section (16).

7. Hub plate according to Claim 6, the fourth side wall section (20) being configured as a radial guide for the helical spring to be received.

8. Hub plate according to one of the preceding claims, the cut-out (6) being of symmetrical configuration.

9. Clutch apparatus, in particular friction clutch for a motor vehicle, with a dampable hub plate (2) according to one of the preceding claims.

## Revendications

1. Disque de moyeu (2) pouvant être amorti, pour un dispositif d'embrayage, en particulier pour un disque d'embrayage d'un embrayage à friction d'un véhicule automobile, comprenant au moins un évidement (6) d'une longueur d'évidement (L) destiné à recevoir au moins un ressort hélicoïdal, dans lequel l'évidement (6) est réalisé pour être ouvert radialement vers l'extérieur et présente un fond d'évidement (11) et deux parois latérales (12, 13), au moins l'une des parois latérales (12 ; 13) présentant une première partie de paroi latérale (16) qui s'étend en oblique en direction du fond d'évidement (11) et définit une rampe réduisant la longueur d'évidement (L) en direction du fond d'évidement (11) de sorte que lorsque le ressort hélicoïdal est introduit dans l'évidement (6) de l'extérieur vers l'intérieur dans le sens radial, le ressort hélicoïdal est automatiquement comprimé, et dans lequel l'évidement (6) présente sur au moins l'une de ses parois latérales (12 ; 13) une deuxième partie de paroi latérale (14) coopérant avec la première partie de paroi latérale (16) de telle sorte que ladite au moins une paroi latérale (12 ; 13) présente une saillie (22) pour fixer le ressort hélicoïdal, et **caractérisé en ce que** le disque de moyeu (2) présente en outre au moins une ouverture (8) sous la forme d'un trou oblong pour recevoir un élément de fixation, l'ouverture (8) étant disposée radialement au niveau de la première partie de paroi latérale (16) s'étendant en oblique.

2. Disque de moyeu selon la revendication 1, dans lequel l'inclinaison de la première partie de paroi latérale (16) peut être déterminée par la longueur d'évidement (L), une profondeur d'évidement (T) et/ou une extension radiale du ressort hélicoïdal à recevoir, la partie de paroi latérale (16) présentant de préférence une inclinaison d'environ 10° à 40°, en particulier de 15° à 35°, par rapport à une direction d'installation du ressort hélicoïdal.

3. Disque de moyeu selon la revendication 2, dans lequel la saillie (22) est conçue pour fournir une fixation pour le ressort hélicoïdal, une longueur de saillie (A) étant de préférence adaptée au ressort hélicoïdal à installer.

4. Disque de moyeu selon l'une quelconque des revendications 1 à 3, dans lequel la paroi latérale (12 ; 13) présentant la saillie présente une troisième partie de paroi latérale (18) s'étendant radialement vers l'extérieur depuis la première partie de paroi latérale (16) et est réalisée de préférence en alignement avec la deuxième partie de paroi latérale (14) .

5. Disque de moyeu selon la revendication 4, dans lequel la troisième partie de paroi latérale (18) est disposée en s'étendant en oblique en direction de l'ouverture d'évidement de sorte que la longueur d'évidement (L) au niveau de l'ouverture d'évidement est agrandie en comparaison avec la longueur d'évidement (L) au niveau du fond d'évidement (11).

6. Disque de moyeu selon l'une quelconque des revendications 1 à 5, dans lequel la saillie (22) comprend une quatrième partie de paroi latérale (20) qui est réalisée en s'étendant de manière approximativement perpendiculaire à la première partie de paroi latérale (16).

7. Disque de moyeu selon la revendication 6, dans lequel la quatrième partie de paroi latérale (20) est réalisée comme un guidage radial pour le ressort hélicoïdal à recevoir.

8. Disque de moyeu selon l'une quelconque des revendications précédentes, dans lequel l'évidement (6) est réalisé en symétrie.

9. Dispositif d'embrayage, en particulier embrayage à friction pour un véhicule automobile, comprenant un disque de moyeu (2) pouvant être amorti selon l'une quelconque des revendications précédentes.
